(19) Europäisches Patentamt
European Patent Office
Office européen des brevets

(11) EP 3 237 901 B1

(12) FASCICULE DE BREVET EUROPEEN

(45) Date de publication et mention
de la délivrance du brevet:
**10.10.2018 Bulletin 2018/41**

(51) Int Cl.:
***G01N 30/86*** (2006.01)

(21) Numéro de dépôt: **15825856.6**

(22) Date de dépôt: **21.12.2015**

(86) Numéro de dépôt international:
**PCT/IB2015/059818**

(87) Numéro de publication internationale:
**WO 2016/103141 (30.06.2016 Gazette 2016/26)**

(54) **MÉTHODE DE SÉLECTION D'UNE ZONE DE TRAVAIL D'UNE COLONNE DE CHROMATOGRAPHIE EN PHASE GAZEUSE**

VERFAHREN ZUR AUSWAHL EINES ARBEITSBEREICHS EINER GASCHROMATOGRAFIESÄULE

METHOD FOR SELECTING A WORKING AREA OF A GAS CHROMATOGRAPHY COLUMN

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **22.12.2014 FR 1463175**

(43) Date de publication de la demande:
**01.11.2017 Bulletin 2017/44**

(73) Titulaire: **Ballet, François**
**74200 Lyaud (FR)**

(72) Inventeur: **Ballet, François**
**74200 Lyaud (FR)**

(74) Mandataire: **Cabinet Poncet**
**7, chemin de Tillier**
**B.P. 317**
**74008 Annecy Cedex (FR)**

(56) Documents cités:
**WO-A1-97/01096**

• **ULRICH NADIN ET AL: "Prediction of gas chromatographic retention indices as classifier in non-target analysis of environmental samples", JOURNAL OF CHROMATOGRAPHY, ELSEVIER SCIENCE PUBLISHERS B.V, NL, vol. 1285, 19 février 2013 (2013-02-19), pages 139-147, XP028996079, ISSN: 0021-9673, DOI: 10.1016/J.CHROMA.2013.02.037**
• **Lubkowitz J.A ET AL: "Determination of the Boiling-Point Distribution by Simulated Distillation from n-Pentane through n-Tetratetracontane in 70 to 80 Seconds", Journal of Chromatographic Science, mai 2002 (2002-05), pages 269-275, XP055229408, United States Extrait de l'Internet: URL:http://chromsci.oxfordjournals.org/content/40/5/269.full.pdf [extrait le 2015-11-18]**
• **Peter Morgan ET AL: "Analysis of Petroleum Fractions by ASTM D2887", Application Note, 2012, XP055229417, Extrait de l'Internet: URL:www.therscientific.com/gccolumns [extrait le 2015-11-18]**
• **Anonymous: "ASTM D2887-01 Standard test Method for Boiling Range Distribution of Petroleum Fractions by Gas Chromatography", , mai 2011 (2011-05), pages 204-216, XP055229708, Extrait de l'Internet: URL:www.astm.org [extrait le 2015-11-19]**

**Description**

DOMAINE TECHNIQUE DE L'INVENTION

La présente invention concerne le domaine de la chromatographie gazeuse, et concerne plus particulièrement une méthode de sélection d'une zone de travail d'une colonne de chromatographie gazeuse pour une utilisation de ladite colonne en chromatographie analytique.

La chromatographie gazeuse est une méthode physico-chimique de séparation des espèces présentes dans un échantillon en phase gazeuse.

Pour effectuer une chromatographie gazeuse, on utilise une colonne de chromatographie gazeuse à tube capillaire. L'échantillon contenant une ou plusieurs espèces à identifier est injecté dans la colonne par un injecteur, et est ensuite entraîné par un courant de phase mobile gazeuse (le plus souvent de l'hélium, de l'azote ou du dihydrogène) dans la colonne. La paroi interne du tube capillaire est revêtue d'une phase stationnaire. La phase stationnaire retient plus ou moins fortement les espèces contenues dans l'échantillon selon l'intensité des forces d'interaction entre les différentes espèces et la phase stationnaire. Les différentes espèces de l'échantillon, entraînées par la phase mobile, parcourent ainsi la colonne de chromatographie selon toute sa longueur à des vitesses différentes et caractéristiques, de sorte qu'elles parviennent à des temps différents dans un détecteur (tel qu'un spectromètre de masse) prévu en sortie de la colonne de chromatographie. Le temps spécifique à chaque espèce pour sortir de la colonne de chromatographie est appelé temps de rétention.

Le comportement d'une colonne de chromatographie est fonction de sa géométrie dont les paramètres sont le diamètre interne du tube capillaire, la longueur du tube capillaire et l'épaisseur de phase stationnaire dont est revêtue la paroi interne du tube capillaire.

Dans des conditions prédéterminées de composition de phase mobile, de débit de phase mobile et de pilotage de la colonne en rampe thermique linéaire unique, le temps de rétention est caractéristique de l'espèce dont la sortie a été détectée. Ainsi, lors d'une chromatographie dite analytique visant à identifier les espèces contenues dans un échantillon, on compare les temps de rétention des espèces à identifier avec les temps de rétention d'espèces déjà connues obtenus dans des conditions similaires de chromatographie, puis on en déduit l'identité des espèces contenues dans l'échantillon.

En guise d'espèces pouvant servir d'étalon, Kovats a utilisé les paraffines (molécules linéaires d'hydrocarbures saturés à chaîne droite, de formule $C_nH_{2n+2}$) et a attribué à chacune de ces paraffines un indice de rétention égal au nombre d'atomes de carbone multiplié par 100. La paraffine $C_1H_4$ a ainsi un indice de rétention de 100 tandis que la paraffine $C_{25}H_{52}$ a un indice de rétention de 2500.

Kovats a modélisé une évolution linéaire des temps de rétention en fonction du nombre d'atomes de carbone dans les paraffines. En utilisant ce modèle, lorsque le temps de rétention $T_R$ d'une espèce à identifier est borné par les temps de rétention $T_{RA}$ et $T_{RB}$ (avec $T_{RA} \leq T_R \leq T_{RB}$) de deux paraffines quelconques A et B d'indice de rétention $I_A$ et $I_B$, on applique de façon courante un modèle gradient selon lequel on attribue à l'espèce à identifier un indice de rétention I en appliquant une régression linéaire entre les deux paraffines A et B. L'indice de rétention I attribué à l'espèce à identifier peut alors être calculé de la manière suivante :

$$I = I_A + K \times (T_R - T_{RA}) \text{ avec } K = (I_A - I_B)/(T_{RA} - T_{RB})$$

L'indice de rétention est ensuite comparé avec des indices de rétention de banques de données, telle que celle mise à disposition par le NIST (National Institute of Scientific Technology) pour identifier l'espèce.

Lorsqu'une nouvelle espèce est trouvée, il lui est attribué un indice de rétention selon la même méthode, et elle est alors répertoriée dans les banques de données avec son indice de rétention.

Divers documents font état du modèle linéaire de Kovats, notamment :

- le document WO 97/01096 A1,
- la publication scientifique « Prediction of gas chromatographic retention indices as classifier in non-target analysis of environmental samples », ULRICH Nadin et al, Journal of chromatography, Elsevier science publishers B.V, vol. 1285, 2013-02-19,
- la publication scientifique « Détermination of the boiling-point distribution by simulated distillation from n-pentane through n-tetratetracontane in 70 to 80 seconds », LUBKOWITZ J.A. et al, Journal of chromatographic science, vol. 40, 2002-05,
- la publication scientifique « Analysis of petroleum fractions by ASTM D2887 », MORGAN Peter et al, 2012,
- la norme ASTM D2287-01 « Standard test method for boiling range distribution of petroleum fractions by gas chromatography », 2011-05.

Le modèle linéaire utilisé par Kovats n'est toutefois qu'une approximation. Même si cette approximation est assez remarquable si on tient compte du matériel qui était alors à disposition des scientifiques, utiliser aujourd'hui ce modèle en prenant pour référence des paraffines quelconques, sur n'importe quelle colonne, avec des dispositifs de chromatographie dont la précision a été grandement améliorée, aboutit au fait qu'une même espèce peut être affublée de divers indices de rétention pouvant fortement varier en fonction des banques de données. Cela nuit à la fiabilité des chromatographies analytiques qui sont réalisées pour tenter d'identifier les espèces d'un échantillon.

## EXPOSE DE L'INVENTION

La présente invention résulte de l'observation par le demandeur que les colonnes de chromatographie n'ont pas une relation linéaire entre les temps de rétention et les indices de rétention de toutes les paraffines.

Un problème proposé par la présente invention est de permettre de caractériser une zone de travail propre à chaque colonne de chromatographie, zone de travail dans laquelle on peut appliquer avec une approximation raisonnable et satisfaisante le modèle linéaire de Kovats.

Pour atteindre ces objets ainsi que d'autres, l'invention propose une méthode de sélection d'une zone de travail d'une colonne de chromatographie gazeuse pour une utilisation de ladite colonne en chromatographie analytique dans des conditions prédéterminées de composition de phase mobile, de débit de phase mobile et de pilotage en rampe thermique linéaire unique, ladite méthode comportant les étapes suivantes :

i) réaliser une chromatographie de plusieurs membres d'une série homologue sur ladite colonne dans lesdites conditions prédéterminées afin d'obtenir les temps de rétention desdits membres de la série homologue propres à ladite colonne,

ii) à l'aide de tables contenant les températures d'ébullition des différents membres de la série homologue et à l'aide des temps de rétention obtenus à l'étape i), établir le couple de données {temps de rétention ; température d'ébullition} pour chaque membre de la série homologue,

iii) choisir un coefficient de corrélation (R) ou coefficient de détermination ($R^2$) de valeur estimée satisfaisante,

iv) appliquer une régression linéaire à des groupes de couples de données {temps de rétention ; température d'ébullition} de membres de la série homologue consécutifs obtenus à l'étape ii),

v) choisir le groupe de couples de données {temps de rétention ; température d'ébullition} de membres de la série homologue consécutifs présentant une linéarité à coefficient de corrélation (R) ou coefficient de détermination ($R^2$) de valeur au moins égale à la valeur du coefficient de régression linéaire ou coefficient de détermination choisi à l'étape iii),

vi) sélectionner la zone de travail correspondant à l'intervalle de temps compris entre le temps de rétention du membre de la série homologue ayant la plus courte chaîne carbonée et le temps de rétention du membre de la série homologue ayant la plus longue chaîne carbonée du groupe de couples de données {temps de rétention ; température d'ébullition} choisi lors de l'étape v).

On caractérise ainsi, pour chaque colonne de chromatographie, une zone de travail dans laquelle, en appliquant les mêmes conditions prédéterminées, on pourra appliquer le modèle linéaire de Kovats en subissant une incertitude de mesure faible, fonction du coefficient de corrélation ou du coefficient de détermination qu'on aura voulu se fixer.

L'invention résulte du constat par le demandeur qu'il existe une zone de travail dans laquelle la colonne de chromatographie suit une relation quasi linéaire entre le temps de rétention et la température d'ébullition des différents membres d'une série homologue, et qu'il est donc possible et judicieux d'utiliser cette propriété.

Avantageusement, lors des étapes i) et ii), on peut ne considérer que les membres de la série homologue ayant une chaîne carbonée d'au moins 5 atomes de carbone. On évite ainsi de tenir compte des molécules de petite taille qui ne respectent pas les lois des gaz parfaits et pour lesquelles on sait que la loi exacte des ébullitions n'est pas valable (comme pour les paraffines par exemple).

De préférence, lors des étapes i) et ii), on peut ne considérer que les membres de la série homologue ayant une chaîne carbonée d'au plus 44 atomes de carbone. Les membres de la série homologue comportant une chaîne carbonée de plus de 44 atomes de carbone viennent en effet à ébullition à des températures très hautes qui nécessitent l'utilisation de colonnes de chromatographie « hautes températures » très spécifiques. Cela réduit également considérablement la qualité de la chromatographie. En outre, la majeure partie des molécules qu'on cherche à identifier par chromatographie analytique ont un indice de rétention inférieur ou égal à 4400 et ont donc un temps de rétention inférieur ou égal à celui du membre de la série homologue ayant une chaîne carbonée d'au plus 44 atomes de carbone.

De préférence, lors de l'étape i), on peut réaliser une chromatographie de paraffines sur ladite colonne. Les paraffines forment en effet une série homologue très simple dans laquelle on évite la présence d'un groupe terminal constitué d'atomes différents des atomes constituant leur chaîne carbonée. Un tel groupe terminal peut en effet induire des perturbations venant contrarier l'existence d'une relation linéaire entre les températures d'ébullition et les temps de rétention des différents membres de la série homologue.

Avantageusement, lors de l'étape ii), on utilise la table suivante de températures d'ébullition des différentes paraffines, à plus ou moins 0,5°C près :

| Nombre d'atomes de carbone présents dans la paraffine | Indice de rétention | Formule de paraffine | Température d'ébullition (°C) |
|---|---|---|---|
| Z = 1 | 100 | $C_1H_4$ | -161,0 |
| Z = 2 | 200 | $C_2H_6$ | -88,0 |
| Z = 3 | 300 | $C_3H_8$ | -42,0 |
| Z = 4 | 400 | $C_4H_{10}$ | -1,0 |
| Z = 5 | 500 | $C_5H_{12}$ | 36,0 |
| Z = 6 | 600 | $C_6H_{14}$ | 68,7 |
| Z = 7 | 700 | $C_7H_{16}$ | 98,4 |
| Z = 8 | 800 | $C_8H_{18}$ | 125,6 |
| Z = 9 | 900 | $C_9H_{20}$ | 150,8 |
| Z = 10 | 1000 | $C_{10}H_{22}$ | 174,1 |
| Z = 11 | 1100 | $C_{11}H_{24}$ | 195,9 |
| Z = 12 | 1200 | $C_{12}H_{26}$ | 216,3 |
| Z = 13 | 1300 | $C_{13}H_{28}$ | 235,4 |
| Z = 14 | 1400 | $C_{14}H_{30}$ | 253,5 |
| Z = 15 | 1500 | $C_{15}H_{32}$ | 270,6 |
| Z = 16 | 1600 | $C_{16}H_{34}$ | 286,5 |
| Z = 17 | 1700 | $C_{17}H_{36}$ | 301,7 |
| Z = 18 | 1800 | $C_{18}H_{38}$ | 316,1 |
| Z = 19 | 1900 | $C_{19}H_{40}$ | 329,7 |
| Z = 20 | 2000 | $C_{20}H_{42}$ | 342,6 |
| Z = 21 | 2100 | $C_{21}H_{44}$ | 355,0 |
| Z = 22 | 2200 | $C_{22}H_{46}$ | 366,8 |
| Z = 23 | 2300 | $C_{23}H_{48}$ | 378,3 |
| Z = 24 | 2400 | $C_{24}H_{50}$ | 389,5 |
| Z = 25 | 2500 | $C_{25}H_{52}$ | 400,5 |
| Z = 26 | 2600 | $C_{26}H_{54}$ | 411,2 |
| Z = 27 | 2700 | $C_{27}H_{56}$ | 421,5 |
| Z = 28 | 2800 | $C_{28}H_{58}$ | 431,6 |
| Z = 29 | 2900 | $C_{29}H_{60}$ | 440,8 |
| Z = 30 | 3000 | $C_{30}H_{62}$ | 449,7 |

Avantageusement, lors de l'étape iii), on choisit un coefficient de régression linéaire ou coefficient de détermination ayant une valeur supérieure ou égale à environ 0,9. Un tel coefficient permet de choisir une zone de travail dans laquelle on pourra appliquer le modèle linéaire de Kovats de façon satisfaisante.

Selon un autre aspect de l'invention, il est proposé une méthode de chromatographie gazeuse analytique d'une substance en phase gazeuse réalisée dans une colonne de chromatographie ;

selon l'invention, ladite méthode de chromatographie gazeuse analytique comporte les étapes suivantes :

a) effectuer la sélection d'une zone de travail en mettant en oeuvre la méthode de sélection précédemment décrite,
b) réaliser la chromatographie de la substance à analyser dans la colonne utilisée lors de l'étape a) et selon les conditions prédéterminées de débit de phase mobile et de pilotage en rampe thermique linéaire utilisées lors de l'étape a), en relevant les temps de rétention des différentes espèces présentes dans la substance analysée,
c) ne conserver que les temps de rétention des différentes espèces présentes dans la substance analysée compris dans la zone de travail,
d) à chaque espèce présente dans la substance analysée, attribuer un indice de rétention en utilisant les temps de rétention des membres de la série homologue déterminés lors de l'étape i) et leurs indices de rétention.

En confinant la chromatographie analytique dans la zone de travail sélectionnée à l'étape a), on s'assure de pouvoir appliquer le modèle linéaire de Kovats de façon satisfaisante.

De préférence, lors de l'étape d), on effectue une régression linéaire entre :

- l'indice de rétention du membre de la série homologue ayant un temps de rétention situé juste en-dessous du temps de rétention de ladite espèce,
- l'indice de rétention du membre de la série homologue ayant un temps de rétention situé juste au-dessus du temps de rétention de ladite espèce.

Le fait de n'opérer qu'une régression linéaire permet de gagner un temps important de calcul, et ce en conservant une précision satisfaisante pour l'indice qui sera déterminé pour l'espèce à identifier.

Et opérer la régression linéaire avec les indices de rétention des membres de la série homologue ayant des temps de rétention juste adjacents permet de limiter au maximum l'effet dit « effet de corde » qui se produit mathématiquement lorsqu'on applique une régression linéaire pour un point d'ordonnée à déterminer et qui est situé entre deux points qui sont en réalité situés sur une courbe au moins du second degré (et non une droite) comme c'est le cas pour les paraffines notamment.

Avantageusement, l'étape b) peut être réalisée simultanément à l'étape i). On réalise ainsi simultanément le choix de la zone de travail et la chromatographie analytique. Les conditions appliquées à la colonne pour la chromatographie analytique sont ainsi rigoureusement les mêmes que celles appliquées pour le choix de la zone de travail. On augmente ainsi la précision de la mesure pour s'affranchir au maximum des paramètres de fonctionnement de la colonne de chromatographie.

DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :

- la figure 1 est un graphique illustrant, pour les paraffines ayant une chaîne carbonée comptant de 2 à 30 atomes de carbone, la relation existant entre l'indice de rétention et le temps de rétention ;
- la figure 2 est un graphique illustrant, pour les paraffines ayant une chaîne carbonée comptant de 2 à 30 atomes de carbone, la relation existant entre le temps de rétention et la température d'ébullition desdites paraffines ;
- la figure 3 est une sélection d'une zone de travail du graphique de la figure 1 ; et
- la figure 4 est un graphique illustrant l'utilisation de la zone de travail sélectionnée de la figure 3 pour la réalisation d'une chromatographie gazeuse analytique.

DESCRIPTION DES MODES DE REALISATION PREFERES

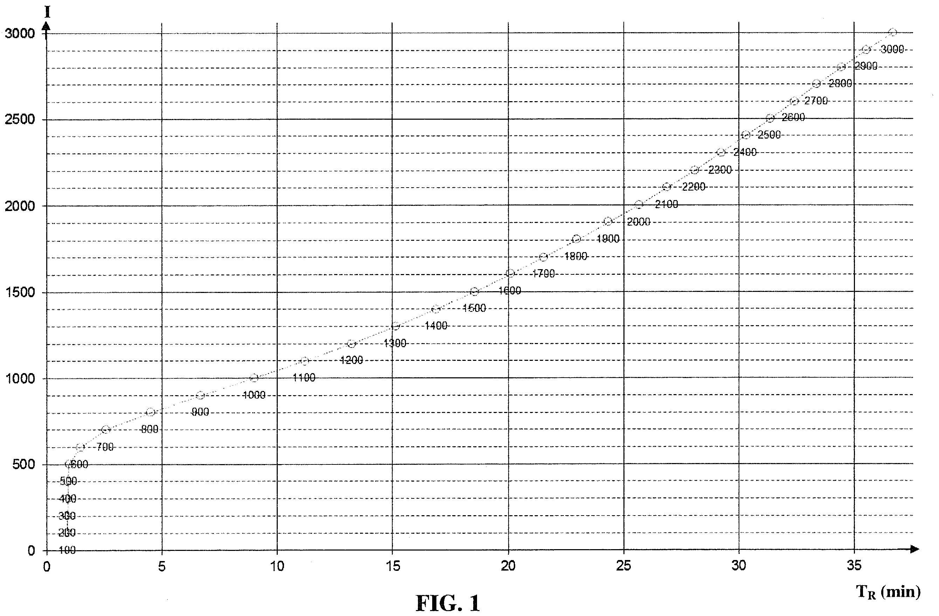

Les figures 1 à 3 sont des graphiques illustrant la méthode de sélection d'une zone de travail selon l'invention, appliquée à une colonne de chromatographie dans des conditions prédéterminées de composition de phase mobile, de débit de phase mobile et de pilotage en rampe thermique linéaire unique. Bien que la méthode soit ici appliquée avec la série homologue des paraffines pour plus de rigueur et de précision, la présente invention est également applicable avec toute autre série homologue, telle que la série homologue des alcools par exemple.

Lors d'une étape i), on effectue une chromatographie gazeuse de paraffines. Dans le cas illustré sur les figures 1 à 3, il est appliqué à la colonne de chromatographie une rampe thermique linéaire unique avec une température initiale de 44°C. Après un maintien à 44°C pendant 2 minutes, il a été appliqué une montée de 8°C par minute jusqu'à atteindre 300°C.

La colonne de chromatographie est une colonne capillaire DB1 commercialisée par la société AGILENT Technologies, Inc. Ladite colonne de chromatographie comporte une phase stationnaire constituée à 100% de diméthylpolysiloxane de 0,5 $\mu$m d'épaisseur greffée à la paroi interne d'un tube capillaire de 30 mètres de longueur et de 0,32 mm de diamètre interne.

Les temps de rétention ont été relevés pour les différentes paraffines ayant un nombre d'atomes de carbone compris entre 2 et 30, ce qui donne le tableau de valeurs suivant :

| Nombre d'atomes de carbone présents dans la paraffine | Indice de rétention | Formule de paraffine | Temps de rétention (min) |
|---|---|---|---|
| Z = 2 | 200 | $C_2H_6$ | 0,90 |
| Z = 3 | 300 | $C_3H_8$ | 0,92 |
| Z = 4 | 400 | $C_4H_{10}$ | 0,94 |
| Z = 5 | 500 | $C_5H_{12}$ | 0,97 |
| Z = 6 | 600 | $C_6H_{14}$ | 1,46 |
| Z = 7 | 700 | $C_7H_{16}$ | 2,58 |
| Z = 8 | 800 | $C_8H_{18}$ | 4,50 |
| Z = 9 | 900 | $C_9H_{20}$ | 6,70 |
| Z = 10 | 1000 | $C_{10}H_{22}$ | 9,02 |
| Z = 11 | 1100 | $C_{11}H_{24}$ | 11,20 |
| Z = 12 | 1200 | $C_{12}H_{26}$ | 13,24 |
| Z = 13 | 1300 | $C_{13}H_{28}$ | 15,14 |
| Z = 14 | 1400 | $C_{14}H_{30}$ | 16,92 |
| Z = 15 | 1500 | $C_{15}H_{32}$ | 18,56 |
| Z = 16 | 1600 | $C_{16}H_{34}$ | 20,10 |
| Z = 17 | 1700 | $C_{17}H_{36}$ | 21,56 |
| Z = 18 | 1800 | $C_{18}H_{38}$ | 22,96 |
| Z = 19 | 1900 | $C_{19}H_{40}$ | 24,35 |
| Z = 20 | 2000 | $C_{20}H_{42}$ | 25,68 |
| Z = 21 | 2100 | $C_{21}H_{44}$ | 26,90 |
| Z = 22 | 2200 | $C_{22}H_{46}$ | 28,08 |
| Z = 23 | 2300 | $C_{23}H_{48}$ | 29,22 |
| Z = 24 | 2400 | $C_{24}H_{50}$ | 30,31 |
| Z = 25 | 2500 | $C_{25}H_{52}$ | 31,37 |
| Z = 26 | 2600 | $C_{26}H_{54}$ | 32,40 |
| Z = 27 | 2700 | $C_{27}H_{56}$ | 33,39 |
| Z = 28 | 2800 | $C_{28}H_{58}$ | 34,45 |
| Z = 29 | 2900 | $C_{29}H_{60}$ | 35,54 |
| Z = 30 | 3000 | $C_{30}H_{62}$ | 36,69 |

Le graphique de la figure 1 reprend ces données en indiquant le temps de rétention $T_R$ des paraffines en fonction de leur indice de rétention I. On observe qu'il s'agit bien d'une courbe et non d'une droite.

Lors d'une étape ultérieure ii), on affecte à chaque paraffine (et donc à chaque indice de rétention de paraffine) sa température d'ébullition. On peut faire usage pour cela des tables de la littérature scientifique, telles que celle fournie par le NIST (National Institute of Scientific Technology).

Dans le cas présent, on utilise la table suivante estimée fiable par le demandeur :

| Nombre d'atomes de carbone présents dans la paraffine | Indice de rétention | Formule de paraffine | Température d'ébullition (°C) |
|---|---|---|---|
| Z = 1 | 100 | $C_1H_4$ | -161,0 |
| Z = 2 | 200 | $C_2H_6$ | -88,0 |
| Z = 3 | 300 | $C_3H_8$ | -42,0 |
| Z = 4 | 400 | $C_4H_{10}$ | -1,0 |
| Z = 5 | 500 | $C_5H_{12}$ | 36,0 |
| Z = 6 | 600 | $C_6H_{14}$ | 68,7 |
| Z = 7 | 700 | $C_7H_{16}$ | 98,4 |
| Z = 8 | 800 | $C_8H_{18}$ | 125,6 |
| Z = 9 | 900 | $C_9H_{20}$ | 150,8 |
| Z = 10 | 1000 | $C_{10}H_{22}$ | 174,1 |
| Z = 11 | 1100 | $C_{11}H_{24}$ | 195,9 |
| Z = 12 | 1200 | $C_{12}H_{26}$ | 216,3 |
| Z = 13 | 1300 | $C_{13}H_{28}$ | 235,4 |
| Z = 14 | 1400 | $C_{14}H_{30}$ | 253,5 |
| Z = 15 | 1500 | $C_{15}H_{32}$ | 270,6 |
| Z = 16 | 1600 | $C_{16}H_{34}$ | 286,5 |
| Z = 17 | 1700 | $C_{17}H_{36}$ | 301,7 |
| Z = 18 | 1800 | $C_{18}H_{38}$ | 316,1 |
| Z = 19 | 1900 | $C_{19}H_{40}$ | 329,7 |
| Z = 20 | 2000 | $C_{20}H_{42}$ | 342,6 |
| Z = 21 | 2100 | $C_{21}H_{44}$ | 355,0 |
| Z = 22 | 2200 | $C_{22}H_{46}$ | 366,8 |
| Z = 23 | 2300 | $C_{23}H_{48}$ | 378,3 |
| Z = 24 | 2400 | $C_{24}H_{50}$ | 389,5 |
| Z = 25 | 2500 | $C_{25}H_{52}$ | 400,5 |
| Z = 26 | 2600 | $C_{26}H_{54}$ | 411,2 |
| Z = 27 | 2700 | $C_{27}H_{56}$ | 421,5 |
| Z = 28 | 2800 | $C_{28}H_{58}$ | 431,6 |
| Z = 29 | 2900 | $C_{29}H_{60}$ | 440,8 |
| Z = 30 | 3000 | $C_{30}H_{62}$ | 449,7 |

On obtient ainsi la table suivante mettant en relation le couple de données {temps de rétention ; température d'ébullition} pour chaque paraffine identifiée lors de la chromatographie :

| Nombre d'atomes de carbone présents dans la paraffine | Indice de rétention | Formule de paraffine | Temps de rétention $T_R$ (min) | Température d'ébullition $T_E$ (°C) |
|---|---|---|---|---|
| Z = 2 | 200 | $C_2H_6$ | 0,90 | -88,0 |
| Z = 3 | 300 | $C_3H_8$ | 0,92 | -42,0 |
| Z = 4 | 400 | $C_4H_{10}$ | 0,94 | -1,0 |
| Z = 5 | 500 | $C_5H_{12}$ | 0,97 | 36,0 |
| Z = 6 | 600 | $C_6H_{14}$ | 1,46 | 68,7 |
| Z = 7 | 700 | $C_7H_{16}$ | 2,58 | 98,4 |
| Z = 8 | 800 | $C_8H_{18}$ | 4,50 | 125,6 |
| Z = 9 | 900 | $C_9H_{20}$ | 6,70 | 150,8 |
| Z = 10 | 1000 | $C_{10}H_{22}$ | 9,02 | 174,1 |
| Z = 11 | 1100 | $C_{11}H_{24}$ | 11,20 | 195,9 |
| Z = 12 | 1200 | $C_{12}H_{26}$ | 13,24 | 216,3 |
| Z = 13 | 1300 | $C_{13}H_{28}$ | 15,14 | 235,4 |
| Z = 14 | 1400 | $C_{14}H_{30}$ | 16,92 | 253,5 |
| Z = 15 | 1500 | $C_{15}H_{32}$ | 18,56 | 270,6 |
| Z = 16 | 1600 | $C_{16}H_{34}$ | 20,10 | 286,5 |
| Z = 17 | 1700 | $C_{17}H_{36}$ | 21,56 | 301,7 |
| Z = 18 | 1800 | $C_{18}H_{38}$ | 22,96 | 316,1 |
| Z = 19 | 1900 | $C_{19}H_{40}$ | 24,35 | 329,7 |
| Z = 20 | 2000 | $C_{20}H_{42}$ | 25,68 | 342,6 |
| Z = 21 | 2100 | $C_{21}H_{44}$ | 26,90 | 355,0 |
| Z = 22 | 2200 | $C_{22}H_{46}$ | 28,08 | 366,8 |
| Z = 23 | 2300 | $C_{23}H_{48}$ | 29,22 | 378,3 |
| Z = 24 | 2400 | $C_{24}H_{50}$ | 30,31 | 389,5 |
| Z = 25 | 2500 | $C_{25}H_{52}$ | 31,37 | 400,5 |
| Z = 26 | 2600 | $C_{26}H_{54}$ | 32,40 | 411,2 |
| Z = 27 | 2700 | $C_{27}H_{56}$ | 33,39 | 421,5 |
| Z = 28 | 2800 | $C_{28}H_{58}$ | 34,45 | 431,6 |
| Z = 29 | 2900 | $C_{29}H_{60}$ | 35,54 | 440,8 |
| Z = 30 | 3000 | $C_{30}H_{62}$ | 36,69 | 449,7 |

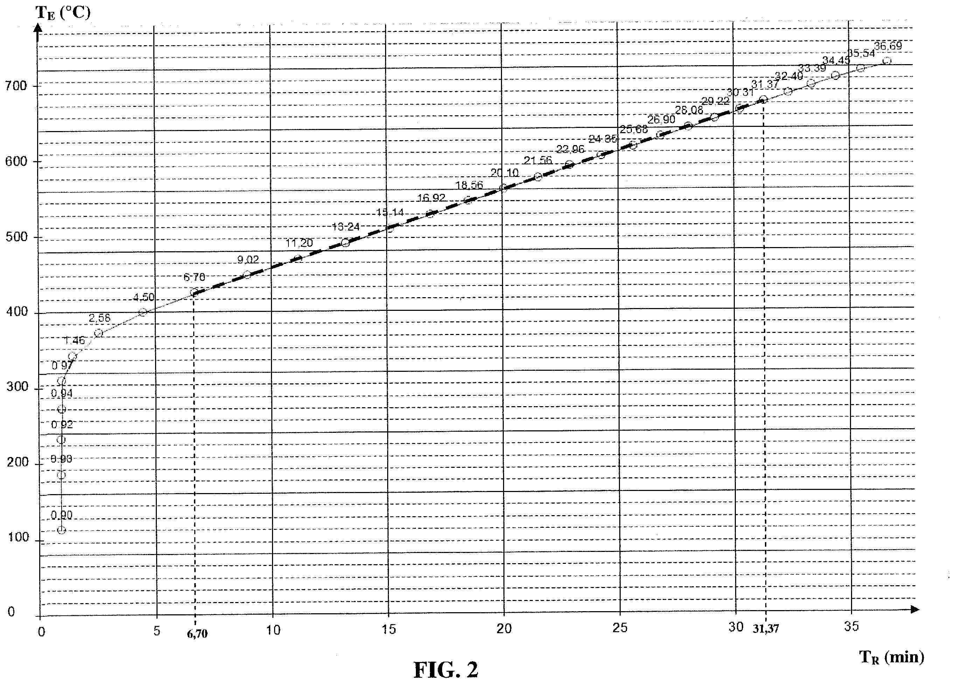

Le graphique de la figure 2 reprend ces données en indiquant la température d'ébullition en fonction du temps de rétention des paraffines. On observe qu'il s'agit d'une courbe présentant un tronçon sensiblement linéaire entre le temps de rétention de la paraffine ayant 7 atomes de carbone et le temps de rétention de la paraffine ayant 27 atomes de carbone.

On se fixe alors un coefficient de détermination $R^2$ de valeur estimée satisfaisante, puis on applique une régression linéaire à des groupes de couples de données {temps de rétention ; température d'ébullition} de paraffines consécutives obtenus précédemment.

Dans le cas illustré sur la figure 2, on choisit un coefficient de détermination $R^2$ supérieur ou égal à 0,99999. On détermine alors que la température d'ébullition $T_E$ des paraffines ayant entre 9 et 25 atomes de carbone respecte l'équation suivante :

$$T_E = 10,13151 \times T_R + 82,57625$$

On a ainsi pu déterminer que, pour la colonne utilisée dans les conditions mises en oeuvre de composition de phase mobile, de débit de phase mobile et de pilotage en rampe thermique linéaire unique, il existe une relation quasi parfaitement linéaire entre la température d'ébullition et le temps de rétention des paraffines ayant de 9 à 25 atomes de carbone, et ce avec un coefficient de détermination $R^2$ supérieur ou égal à 0,99999.

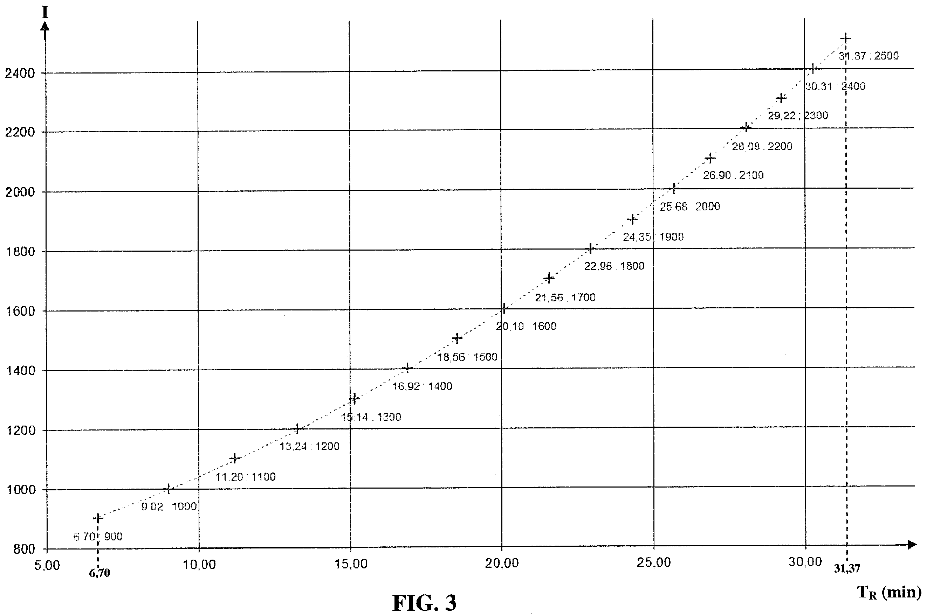

On sélectionne alors comme zone de travail, sur le graphique de la figure 1, l'intervalle de temps compris entre le temps de rétention de la paraffine ayant 9 atomes de carbone et le temps de rétention de la paraffine ayant 25 atomes de carbone. Dans cette zone de travail, on pourra appliquer le modèle linéaire de Kovats en subissant une incertitude de mesure faible, fonction du coefficient de corrélation ou du coefficient de détermination qu'on s'est fixé. Cette zone de travail est illustrée plus en détails sur la figure 3.

Lors d'une chromatographie en phase gazeuse à l'aide de la même colonne, utilisée dans les mêmes conditions prédéterminées de composition de phase mobile, de débit de phase mobile et de pilotage en rampe thermique linéaire unique, on relève les temps de rétention des différentes espèces présentes dans la substance analysée. Cette chromatographie analytique peut être réalisée de façon simultanée à la sélection de la zone de travail ou après la sélection de la zone de travail.

Lors de cette chromatographie, on ne retient que les temps de rétention des différentes espèces présentes dans la substance analysée compris dans la zone de travail. En l'espèce, on ne retient ici que les temps de rétention compris entre 6,70 minutes et 31,37 minutes.

Par exemple, on peut relever un temps de rétention $T_R$ de 25 minutes pour une espèce à déterminer. Ce temps de rétention étant compris entre 6,70 minutes et 31,37 minutes, il est situé dans la zone de travail et est donc conservé.

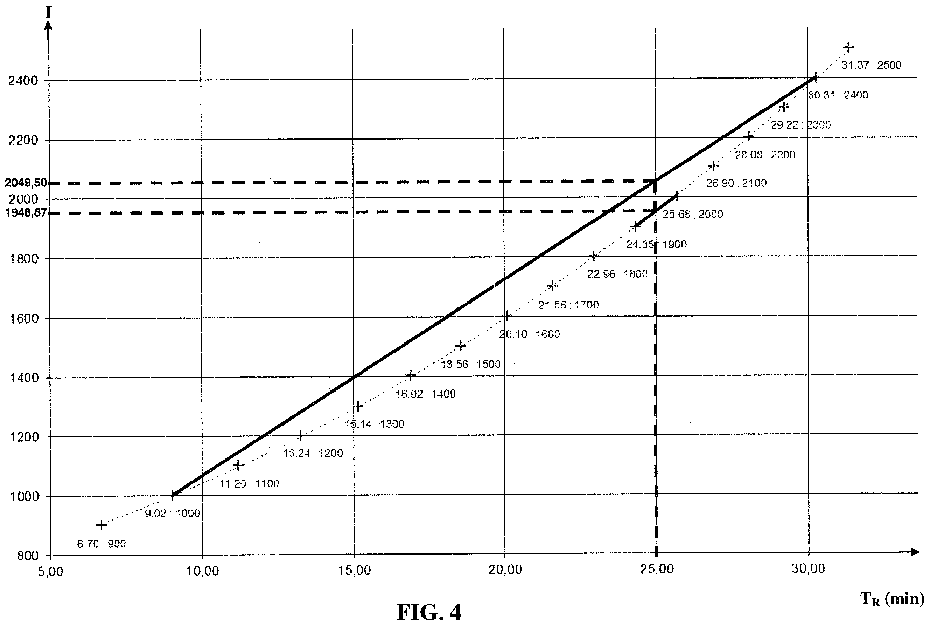

Le temps de rétention de l'espèce à identifier est compris entre les paraffines ayant respectivement 19 et 20 atomes de carbone. On lui attribue alors un indice de rétention I basé sur les indices de rétention $I_{19}$ et $I_{20}$ et sur les temps de rétention $T_{19}$ et $T_{20}$ de ces deux paraffines adjacentes seulement, en effectuant le calcul suivant (illustré graphiquement sur la figure 4) :

$$I = I_{19} + K \times (T_R - T_{19}) \text{ avec } K = (I_{19} - I_{20})/(T_{19} - T_{20})$$

On parvient ainsi à un indice de rétention I de 1948,87.

On compare alors cet indice avec les banques de données disponibles pour trouver la molécule à laquelle pourrait correspondre l'espèce identifiée.

Le fait d'utiliser les indices et temps de rétention des paraffines immédiatement adjacentes permet de conserver un maximum de précision pour limiter un « effet de corde » venant fausser la détermination de l'indice de rétention de l'espèce à déterminer.

Un tel effet de corde est par exemple illustré sur la figure 4 sur laquelle on a également calculé l'indice de rétention I de l'espèce à déterminer à partir des temps et indices de rétention des paraffines ayant respectivement 10 et 24 atomes de carbone. On obtient alors :

$$I = I_{10} + K \times (T_R - T_{10}) \text{ avec } K = (I_{10} - I_{24})/(T_{10} - T_{24}) = 2049,50$$

L'indice de rétention I est ainsi faussé d'un peu plus de 100 points, ce qui est évidemment très dommageable car cela compromet fortement les chances d'identifier convenablement la molécule correspondant à l'espèce à identifier à l'aide des tables de données des indices de rétention.

La faible incertitude de la méthode de chromatographie gazeuse analytique selon l'invention peut être illustrée en calculant l'équation mathématique de la courbe sur laquelle se trouvent les points du graphique des figures 3 et 4. En l'occurrence, la courbe formée par ces points peut être approximée, avec un coefficient de détermination de 0,99989, par l'équation du second degré suivante :

$$I = 1,12509 \times T_R^2 + 21,33930 \times T_R + 715,63113$$

En appliquant cette équation avec un temps de rétention $T_R$ de 25 minutes, on trouve un indice de rétention I de 1952,29, ce qui est à l'évidence très proche de l'indice de rétention I de 1948,87 trouvé précédemment.

La méthode de chromatographie gazeuse analytique selon l'invention permet donc d'éviter au praticien la réalisation de calculs longs et pénibles d'équations du second degré, tout en conservant une précision satisfaisante dans le calcul de l'indice de rétention I de l'espèce à identifier.

La présente invention n'est pas limitée aux modes de réalisation qui ont été explicitement décrits, mais elle en inclut les diverses variantes et généralisations contenues dans le domaine des revendications ci-après.

## Revendications

**1.** Méthode de sélection d'une zone de travail d'une colonne de chromatographie gazeuse pour une utilisation de ladite colonne en chromatographie analytique dans des conditions prédéterminées de composition de phase mobile, de débit de phase mobile et de pilotage en rampe thermique linéaire unique, **caractérisée en ce qu'**elle comporte les étapes suivantes :

i) réaliser une chromatographie de plusieurs membres d'une série homologue sur ladite colonne dans lesdites conditions prédéterminées afin d'obtenir les temps de rétention desdits membres de la série homologue propres à ladite colonne,

ii) à l'aide de tables contenant les températures d'ébullition des différents membres de la série homologue et à l'aide des temps de rétention obtenus à l'étape i), établir le couple de données {temps de rétention ; température d'ébullition} pour chaque membre de la série homologue,

iii) choisir un coefficient de corrélation (R) ou coefficient de détermination ($R^2$) de valeur estimée satisfaisante,

iv) appliquer une régression linéaire à des groupes de couples de données {temps de rétention ; température d'ébullition} de membres de la série homologue consécutifs obtenus à l'étape ii),

v) choisir le groupe de couples de données {temps de rétention ; température d'ébullition} de membres de la série homologue consécutifs présentant une linéarité à coefficient de corrélation (R) ou coefficient de détermination ($R^2$) de valeur au moins égale à la valeur du coefficient de régression linéaire ou coefficient de détermination choisi à l'étape iii),

vi) sélectionner la zone de travail correspondant à l'intervalle de temps compris entre le temps de rétention du membre de la série homologue ayant la plus courte chaîne carbonée et le temps de rétention du membre de la série homologue ayant la plus longue chaîne carbonée du groupe de couples de données {temps de rétention ; température d'ébullition} choisi lors de l'étape v).

**2.** Méthode de sélection selon la revendication 1, **caractérisée en ce que**, lors des étapes i) et ii), on ne considère que les membres de la série homologue ayant une chaîne carbonée d'au moins 5 atomes de carbone.

**3.** Méthode de sélection selon l'une des revendications 1 ou 2, **caractérisée en ce que**, lors des étapes i) et ii), on ne considère que les membres de la série homologue ayant une chaîne carbonée d'au plus 44 atomes de carbone.

**4.** Méthode de sélection selon l'une quelconque des revendications 1 à 3, **caractérisée en ce que**, lors de l'étape i), on réalise une chromatographie de paraffines sur ladite colonne.

**5.** Méthode de sélection selon la revendication 4, **caractérisée en ce que**, lors de l'étape ii), on utilise la table suivante de températures d'ébullition des différentes paraffines, à plus ou moins 0,5°C près :

| Nombre d'atomes de carbone présents dans la paraffine | Indice de rétention | Formule de paraffine | Température d'ébullition (°C) |
|---|---|---|---|
| Z = 1 | 100 | $C_1H_4$ | -161,0 |
| Z = 2 | 200 | $C_2H_6$ | -88,0 |
| Z = 3 | 300 | $C_3H_8$ | -42,0 |
| Z = 4 | 400 | $C_4H_{10}$ | -1,0 |
| Z = 5 | 500 | $C_5H_{12}$ | 36,0 |
| Z = 6 | 600 | $C_6H_{14}$ | 68,7 |
| Z = 7 | 700 | $C_7H_{16}$ | 98,4 |
| Z = 8 | 800 | $C_8H_{18}$ | 125,6 |

(suite)

| Nombre d'atomes de carbone présents dans la paraffine | Indice de rétention | Formule de paraffine | Température d'ébullition (°C) |
|---|---|---|---|
| Z = 9 | 900 | $C_9H_{20}$ | 150,8 |
| Z = 10 | 1000 | $C_{10}H_{22}$ | 174,1 |
| Z = 11 | 1100 | $C_{11}H_{24}$ | 195,9 |
| Z = 12 | 1200 | $C_{12}H_{26}$ | 216,3 |
| Z = 13 | 1300 | $C_{13}H_{28}$ | 235,4 |
| Z = 14 | 1400 | $C_{14}H_{30}$ | 253,5 |
| Z = 15 | 1500 | $C_{15}H_{32}$ | 270,6 |
| Z = 16 | 1600 | $C_{16}H_{34}$ | 286,5 |
| Z = 17 | 1700 | $C_{17}H_{36}$ | 301,7 |
| Z = 18 | 1800 | $C_{18}H_{38}$ | 316,1 |
| Z = 19 | 1900 | $C_{19}H_{40}$ | 329,7 |
| Z = 20 | 2000 | $C_{20}H_{42}$ | 342,6 |
| Z = 21 | 2100 | $C_{21}H_{44}$ | 355,0 |
| Z = 22 | 2200 | $C_{22}H_{46}$ | 366,8 |
| Z = 23 | 2300 | $C_{23}H_{48}$ | 378,3 |
| Z = 24 | 2400 | $C_{24}H_{50}$ | 389,5 |
| Z = 25 | 2500 | $C_{25}H_{52}$ | 400,5 |
| Z = 26 | 2600 | $C_{26}H_{54}$ | 411,2 |
| Z = 27 | 2700 | $C_{27}H_{56}$ | 421,5 |
| Z = 28 | 2800 | $C_{28}H_{58}$ | 431,6 |
| Z = 29 | 2900 | $C_{29}H_{60}$ | 440,8 |
| Z = 30 | 3000 | $C_{30}H_{62}$ | 449,7 |

6. Méthode de sélection selon l'une quelconque des revendications 1 à 5, **caractérisée en ce que**, lors de l'étape iii), on choisit un coefficient de régression linéaire ou coefficient de détermination ayant une valeur supérieure ou égale à 0,9.

7. Méthode de chromatographie gazeuse analytique d'une substance en phase gazeuse réalisée dans une colonne de chromatographie, **caractérisée en ce qu'**elle comporte les étapes suivantes :

   a) effectuer la sélection d'une zone de travail en mettant en oeuvre la méthode de sélection selon l'une quelconque des revendications 1 à 6,
   b) réaliser la chromatographie de la substance à analyser dans la colonne utilisée lors de l'étape a) et selon les conditions prédéterminées de débit de phase mobile et de pilotage en rampe thermique linéaire utilisées lors de l'étape a), en relevant les temps de rétention des différentes espèces présentes dans la substance analysée,
   c) ne conserver que les temps de rétention des différentes espèces présentes dans la substance analysée compris dans la zone de travail,
   d) à chaque espèce présente dans la substance analysée, attribuer un indice de rétention en utilisant les temps de rétention des membres de la série homologue déterminés lors de l'étape i) et leurs indices de rétention.

8. Méthode de chromatographie gazeuse analytique selon la revendication 7, **caractérisée en ce que**, lors de l'étape d), on effectue une régression linéaire entre :

- l'indice de rétention du membre de la série homologue ayant un temps de rétention situé juste en-dessous du temps de rétention de ladite espèce,
- l'indice de rétention du membre de la série homologue ayant un temps de rétention situé juste au-dessus du temps de rétention de ladite espèce.

9. Méthode de chromatographie gazeuse analytique selon l'une des revendications 7 ou 8, **caractérisée en ce que** l'étape b) est réalisée simultanément à l'étape i).

**Patentansprüche**

1. Verfahren zur Auswahl eines Arbeitsbereichs einer Gaschromatographiesäule für eine Verwendung der analytischen Chromatographiesäule unter vorbestimmten Bedingungen der Zusammensetzung der mobilen Phase, der Leistung der mobilen Phase und der Steuerungsphase der einzigen linearen thermischen Steigung, **gekennzeichnet durch** die folgenden Schritte:

   i) Ausführung einer Chromatographie mehrerer Glieder einer homologen Reihe in der genannten Säule bei den vorbestimmten Bedingungen, um die Retentionszeiten der Glieder der homologen Reihe zu erhalten, die zu der Säule gehören,
   ii) Festlegen des Datenpaares (Retentionszeiten, Siedetemperaturen) für jedes Glied der homologen Reihe mit Hilfe von Tabellen enthaltend die Siedetemperaturen der einzelnen Glieder der homologen Reihe und mit Hilfe der in Schritt i) ermittelten Retentionszeiten,
   iii) Wahl eines Korrelationskoeffizienten (R) oder eines Determinationskoeffizienten ($R^2$) mit einem ausreichenden Schätzwert,
   iv) Anwenden einer linearen Regression auf Gruppen von Datenpaaren (Retentionszeit, Siedetemperatur) von Gliedern der im Schritt ii) erhaltenen, aufeinander folgenden Glieder der homologen Reihe,
   v) Wahl der Gruppe der Datenpaare (Retentionszeit, Siedetemperatur) der aufeinander folgenden Glieder der homologen Reihe, die eine Linearität von Korrelationskoeffizient (R) oder Determinationskoeffizient ($R^2$) mit einem Wert hat, der wenigstens gleich dem Wert der im Schritt iii) gewählten linearen Regressionskoeffizienten oder Determinationskoeffizienten ist,
   vi) Auswahl des Arbeitsbereiches der Gruppe von im Schritt v) gewählten Datenpaare (Retentionszeit, Siedetemperatur) entsprechend dem Zeitintervall zwischen der Retentionszeit des Gliedes der homologen Reihe mit der kürzesten Kohlenstoffkette und der Retentionszeit des Gliedes der homologen Reihe mit der längsten Kohlenstoffkette.

2. Verfahren nach Anspruch 1, **dadurch gekennzeichnet**, das bei den Schritten i) und ii) nur die Glieder der homologen Reihe berücksichtigt werden, die eine Kohlenstoffkette von wenigstens fünf Kohlenstoffatomen haben.

3. Verfahren nach Anspruch 1 oder 2, **dadurch gekennzeichnet, dass** bei den Schritten i) und ii) nur die Glieder der homologen Reihe berücksichtigt werden, die eine Kohlenstoffkette von mehr als 44 Kohlenstoffatomen haben.

4. Verfahren nach einem der Ansprüche 1 bis 3, **dadurch gekennzeichnet, dass** im Schritt i) in der Säule eine Paraffin-Chromatographie durchgeführt wird.

5. Verfahren nach Anspruch 4, **dadurch gekennzeichnet, dass** im Schritt ii) die nachstehende Tabelle von Siedetemperaturen der verschiedenen Paraffine bei mehr oder weniger von 0,5 °C angewandt wird:

| Zahl der Kohlenstoffatome im Paraffin | Retentionsindex | Paraffinformel | Siedetemperatur (°C) |
|---|---|---|---|
| Z = 1 | 100 | $C_1H_4$ | -161,0 |
| Z = 2 | 200 | $C_2H_6$ | - 88,0 |
| Z = 3 | 300 | $C_3H_8$ | - 42,0 |
| Z = 4 | 400 | $C_4H_{10}$ | - 1,0 |
| Z = 5 | 500 | $C_5H_{12}$ | 36,0 |
| Z = 6 | 600 | $C_6H_{14}$ | 68,7 |
| Z = 7 | 700 | $C_7H_{16}$ | 98,4 |

(fortgesetzt)

| Zahl der Kohlenstoffatome im Paraffin | Retentionsindex | Paraffinformel | Siedetemperatur (°C) |
|---|---|---|---|
| Z = 8 | 800 | $C_8H_{18}$ | 125,6 |
| Z = 9 | 900 | $C_9H_{20}$ | 150,8 |
| Z = 10 | 1000 | $C_{10}H_{22}$ | 174,1 |
| Z = 11 | 1100 | $C_{11}H_{24}$ | 195,9 |
| Z = 12 | 1200 | $C_{12}H_{26}$ | 216,3 |
| Z = 13 | 1300 | $C_{13}H_{28}$ | 235,4 |
| Z = 14 | 1400 | $C_{14}H_{30}$ | 253,5 |
| Z = 15 | 1500 | $C_{15}H_{32}$ | 270,6 |
| Z = 16 | 1600 | $C_{16}H_{34}$ | 286,5 |
| Z = 17 | 1700 | $C_{17}H_{36}$ | 301,7 |
| Z = 18 | 1800 | $C_{18}H_{38}$ | 316.1 |
| Z = 19 | 1900 | $C_{19}H_{40}$ | 329,7 |
| Z = 20 | 2000 | $C_{20}H_{42}$ | 342,6 |
| Z = 21 | 2100 | $C_{21}H_{44}$ | 355,0 |
| Z = 22 | 2200 | $C_{22}H_{46}$ | 366,8 |
| Z = 23 | 2300 | $C_{23}H_{48}$ | 378,3 |
| Z = 24 | 2400 | $C_{24}H_{50}$ | 389,5 |
| Z = 25 | 2500 | $C_{25}H_{52}$ | 400,5 |
| Z = 26 | 2600 | $C_{26}H_{54}$ | 411,2 |
| Z = 27 | 2700 | $C_{27}Z_{56}$ | 421,5 |
| Z = 28 | 2800 | $C_{28}H_{58}$ | 431,6 |
| Z = 29 | 2900 | $C_{29}H_{60}$ | 440,8 |
| Z = 30 | 3000 | $C_{30}H_{62}$ | 449,7 |

6. Verfahren nach einem der Ansprüche 1 bis 5, **dadurch gekennzeichnet, dass** im Schritt iii) ein linearer Regressionskoeffizient oder Determinationskoeffizient gewählt wird, dessen Wert größer oder gleich 0,9 ist.

7. Verfahren zur analytischen Gaschromatographie einer Substanz in der Gasphase, das in einer Chromatographiesäule durchgeführt wird, **gekennzeichnet, durch** die folgenden Schritte:

   a) Auswahl eines Arbeitsbereiches durch Anwendung des Auswahlverfahrens nach einem der Ansprüche 1 bis 6,
   b) Ausführen der Chromatographie der zu analysierenden Substanz in der im Schritt a) verwendeten Säule und mit den vorbestimmten Bedingungen für die mobile Leistungsphase und die Steuerungsphase für die lineare thermische Steigung im Schritt a) durch Erfassen der Retentionszeiten der unterschiedlichen Sorten in der analysierten Substanz,
   c) Konservieren nur der Retentionszeiten der unterschiedlichen Sorten in der analysierten Substanz in dem Arbeitsbereich,
   d) Zuordnen eines Retentionsindexes für jede Sorte innerhalb der analysierten Substanz durch Verwendung der Retentionszeiten der Glieder der homologen Reihe im Schritt i) und ihrer Retentionsindizes.

8. Verfahren nach Anspruch 7, **dadurch gekennzeichnet, dass** im Schritt d) eine lineare Regression durchgeführt wird zwischen:

   - dem Retentionsindex des Gliedes der homologen Reihe mit einer Retentionszeit, die genau unter der Retentionszeit der Sorte liegt und
   - dem Retentionsindex des Gliedes der homologen Reihe mit einer Retentionszeit, die genau über der Retentionszeit der Sorte liegt.

9. Verfahren nach Anspruch 7 oder 8, **dadurch gekennzeichnet, dass** der Schritt b) gleichzeitig mit dem Schritt i) durchgeführt wird.

**Claims**

1. A method for selecting a working area of a gas chromatography column for using said column in analytical chromatography in predetermined conditions of mobile phase composition, mobile phase flow rate and control in a single linear temperature ramp, **characterized in that** it comprises the following steps:

    i) performing chromatography of several members of a homologous series on said column in said predetermined conditions in order to obtain the retention times of said members of the homologous series specific to said column,
    ii) using tables containing the boiling points of the different members of the homologous series and using the retention times obtained in step i), establishing the data pair {retention time; boiling point} for each member of the homologous series,
    iii) selecting a correlation coefficient (R) or coefficient of determination ($R^2$) with a satisfactory estimated value,
    iv) applying linear regression to groups of data pairs {retention time; boiling point} of consecutive members of the homologous series obtained in step ii),
    v) selecting the group of data pairs {retention time; boiling point} of consecutive members of the homologous series displaying linearity with a correlation coefficient (R) or coefficient of determination ($R^2$) with a value at least equal to the value of the coefficient of linear regression or coefficient of determination selected in step iii),
    vi) selecting the working area corresponding to the time interval between the retention time of the member of the homologous series having the shortest carbon chain and the retention time of the member of the homologous series having the longest carbon chain of the group of data pairs {retention time; boiling point} selected in step v) .

2. The method of selection as claimed in claim 1, **characterized in that**, in steps i) and ii), only the members of the homologous series having a carbon chain of at least 5 carbon atoms are considered.

3. The method of selection as claimed in one of claims 1 or 2, **characterized in that**, in steps i) and ii), only the members of the homologous series having a carbon chain of at most 44 carbon atoms are considered.

4. The method of selection as claimed in any one of claims 1 to 3, **characterized in that**, in step i), chromatography of paraffins is carried out on said column.

5. The method of selection as claimed in claim 4, **characterized in that**, in step ii), the following table of boiling points of the different paraffins, to the nearest 0.5°C, is used:

| Number of carbon atoms present in the paraffin | Retention index | Paraffin formula | Boiling point (°C) |
|:---:|:---:|:---:|:---:|
| Z = 1 | 100 | $C_1H_4$ | -161.0 |
| Z = 2 | 200 | $C_2H_6$ | -88.0 |
| Z = 3 | 300 | $C_3H_8$ | -42.0 |
| Z = 4 | 400 | $C_4H_{10}$ | -1.0 |
| Z = 5 | 500 | $C_5H_{12}$ | 36.0 |
| Z = 6 | 600 | $C_6H_{14}$ | 68.7 |
| Z = 7 | 700 | $C_7H_{16}$ | 98.4 |
| Z = 8 | 800 | $C_8H_{18}$ | 125.6 |
| Z = 9 | 900 | $C_9H_{20}$ | 150.8 |
| Z = 10 | 1000 | $C_{10}H_{22}$ | 174.1 |
| Z = 11 | 1100 | $C_{11}H_{24}$ | 195.9 |
| Z = 12 | 1200 | $C_{12}H_{26}$ | 216.3 |
| Z = 13 | 1300 | $C_{13}H_{28}$ | 235.4 |
| Z = 14 | 1400 | $C_{14}H_{30}$ | 253.5 |
| Z = 15 | 1500 | $C_{15}H_{32}$ | 270.6 |

(continued)

| Number of carbon atoms present in the paraffin | Retention index | Paraffin formula | Boiling point (°C) |
|---|---|---|---|
| Z = 16 | 1600 | $C_{16}H_{34}$ | 286.5 |
| Z = 17 | 1700 | $C_{17}H_{36}$ | 301.7 |
| Z = 18 | 1800 | $C_{18}H_{38}$ | 316.1 |
| Z = 19 | 1900 | $C_{19}H_{40}$ | 329.7 |
| Z = 20 | 2000 | $C_{20}H_{42}$ | 342.6 |
| Z = 21 | 2100 | $C_{21}H_{44}$ | 355.0 |
| Z = 22 | 2200 | $C_{22}H_{46}$ | 366.8 |
| Z = 23 | 2300 | $C_{23}H_{48}$ | 378.3 |
| Z = 24 | 2400 | $C_{24}H_{50}$ | 389.5 |
| Z = 25 | 2500 | $C_{25}H_{52}$ | 400.5 |
| Z = 26 | 2600 | $C_{26}H_{54}$ | 411.2 |
| Z = 27 | 2700 | $C_{27}H_{56}$ | 421.5 |
| Z = 28 | 2800 | $C_{28}H_{58}$ | 431.6 |
| Z = 29 | 2900 | $C_{29}H_{60}$ | 440.8 |
| Z = 30 | 3000 | $C_{30}H_{62}$ | 449.7 |

6. The method of selection as claimed in any one of claims 1 to 5, **characterized in that**, in step iii), a coefficient of linear regression or coefficient of determination is selected having a value greater than or equal to 0.9.

7. A method of analytical gas chromatography of a substance in the gas phase, carried out in a chromatography column, **characterized in that** it comprises the following steps:

a) selecting a working area using the method of selection as claimed in any one of claims 1 to 6,
b) performing chromatography of the substance to be analyzed in the column used in step a) and according to the predetermined conditions of mobile phase flow rate and control in a linear temperature ramp used in step a), detecting the retention times of the different species present in the substance analyzed,
c) only keeping the retention times of the different species present in the substance analyzed comprised in the working area,
d) attributing a retention index to each species present in the substance analyzed, using the retention times of the members of the homologous series determined in step i) and their retention indices.

8. The method of analytical gas chromatography as claimed in claim 7, **characterized in that**, in step d), linear regression is performed between:

- the retention index of the member of the homologous series having a retention time that is just less than the retention time of said species,
- the retention index of the member of the homologous series having a retention time that is just above the retention time of said species.

9. The method of analytical gas chromatography as claimed in one of claims 7 or 8, **characterized in that** step b) is carried out simultaneously with step i).

FIG. 1

EP 3 237 901 B1

FIG. 2

**FIG. 3**

18

**FIG. 4**

EP 3 237 901 B1

## RÉFÉRENCES CITÉES DANS LA DESCRIPTION

**Documents brevets cités dans la description**

- WO 9701096 A1

**Littérature non-brevet citée dans la description**

- Prediction of gas chromatographic retention indices as classifier in non-target analysis of environmental samples. **ULRICH NADIN et al.** Journal of chromatography. Elsevier science publishers B.V, 19 Février 2013, vol. 1285
- **LUBKOWITZ J.A. et al.** Détermination of the boiling-point distribution by simulated distillation from n-pentane through n-tetratetracontane in 70 to 80 seconds. *Journal of chromatographic science,* vol. 40, 2002-05
- **MORGAN PETER et al.** *Analysis of petroleum fractions by ASTM D2887,* 2012
- *Standard test method for boiling range distribution of petroleum fractions by gas chromatography,* Mai 2011